# EUROPEAN PATENT APPLICATION

(11) **EP 1 142 925 A1**
(43) Date of publication of application: **10.10.2001**
(21) Application number: 99961411.8
(22) Date of filing: 27.12.1999
(51) Int. Cl.: C08G 73/10, C08G 69/10, C08G 69/48

(54) **PROCESSES FOR PRODUCING WATER-ABSORBING RESIN**

(30) Priority: 25.12.1998 JP 36997398; 25.12.1998 JP 36997698; 25.12.1998 JP 36997798
(71) Applicant: Mitsui Chemicals, Inc., Tokyo 100-6070 (JP)
(72) Inventor: MACHIDA, Katsuhiko, Ichihara-shi, Chiba 299-0125 (JP); FUKAWA, Susumu, Hiratsuka-shi, Kanagawa 254-0802 (JP); OGAWA, Shinji, Kouhoku-ku, Yokohama-shi, Kanagawa 222-0 (JP); KATOH, Toshio, Kawaguchi-shi, Saitama 333-0866 (JP); SUKEGAWA, Makoto, Aoba-ku, Yokohama-shi, Kanagawa 227-0067 (JP); IRIZATO, Yoshihiro, Ichihara-shi, Chiba 299-0125 (JP)
(74) Representative: Strehl Schübel-Hopf & Partner
(86) International application number: JP9907329
(87) International publication number: WO0039194

(57) **Abstract**

Provided are a process for the production of a cross-linked superabsorbent polymer, which has excellent water absorbency and biodegradability, by using an economical maleic acid derivative as a raw material, and a process for the production of a biodegradable, cross-linked superabsorbent polymer by simper reaction steps. A process for the production of a superabsorbent resin, which contains a cross-linked superabsorbent polymer, is also provided. This process comprises the following steps: as step 1, conducting a polymerization reaction and a cross-linking reaction concurrently at 100 to 350°C in a reaction system to produce a cross-linked polymer, and as step 2, subjecting the cross-linked polymer, which has been produced in step 1, to hydrolysis to produce the cross-linked superabsorbent polymer. The reaction system contains (A) at least one monomer selected from the group consisting of (a-1) maleic anhydride and ammonia, (a-2) a dicarboxylic acid having 4 carbon atoms and ammonia, (a-3) a monoammonium salt and/or diammonium salt of a dicarboxylic acid having 4 carbon atoms, (a-4) a monoamide and/or diamide of a dicarboxylic acid having 4 carbon atoms, and (a-5) an imide having 4 carbon atoms, (B) a cross-linking agent, and (C) an acid.

## Description

### Technical Field

This invention relates to a process for the production of cross-linked superabsorbent polymers.

This invention is also concerned with a process for the production of cross-linked superabsorbent polymers having biodegradability.

### Background Art

A cross-linked superabsorbent polymer is a resin capable of absorbing water from several tens of times to several thousands of times as much its own weight. Such cross-linked superabsorbent polymers are used in a wide variety of fields such as sanitary products such as disposable diapers, sanitary supplies, breast milk pads, and disposable dustcloths; medical supplies such as wound-protecting dressing materials, medical underpads, and cataplasms; daily necessaries such as pet sheets, portable toilets, gel-type aromatics, gel-type deodorants, moisture superabsorbent fibers, and disposable pocket heaters; toiletry products such as shampoos, hair-setting gels, and humectants; agricultural and horticultural products such as agricultural and horticultural water-holding materials, life extenders for cut flowers, floral foams (fixing bases for cut flowers), seedling nursery beds, solution culture vegetation sheets, seed tapes, fluidized seedling media, and dew-preventing agricultural sheets; food packaging materials such as freshness-retaining materials for food trays, and drip absorbent sheets; materials for use during transportation, such as cold insulators, and water absorbent sheets for use during the transportation of fresh vegetables; construction and civil engineering materials such as dew-preventing construction materials, sealing materials for civil engineering and construction, lost circulation preventives for shield tunneling, concrete admixtures, gaskets and packings; materials for electric and electronic equipment, such as sealing materials for fiber optics and electronic equipment, waterblocking materials for communication cables, and ink jet recording papers; water treatment materials, such as sludge solidifiers, and dehydrating or water-eliminating agents for gasoline and oils; textile-printing sizing materials; water-swelling toys; and artificial snow. Using their sustained-release property of chemicals, applications such as sustained-release fertilizers, sustained-release agrichemicals and sustained-release drugs are expected. Further, using their hydrophilicity, their application as humidity-regulating materials is expected; and using their charge-holding property, their application as antistatic agents is also expected.

However, it is primarily acrylate-based, cross-linked superabsorbent polymers that have heretofore been used for the above-mentioned applications. As acrylate-based, cross-linked superabsorbent polymers practically have no biodegradability, they are indicated to involve a potential problem in that they may become causes for various environmental problems when they are disposed of after use.

Biodegradable resins are, therefore, attracting interests in recent years, and as replacements for conventional non-biodegradable resins, use of resins having biodegradability has also been proposed in cross-linked superabsorbent polymers. As an example, resins each of which has a structure formed by cross-linking a polyamino acid are attracting interests as cross-linked superabsorbent polymers excellent in biodegradability.

Especially on processes for producing polymers (polyamino acids), each of which has a structure similar to that available from use of a costly amino acid as a raw material, from maleic acid derivatives which are more economical raw materials, a great deal of investigations have also been conducted as disclosed in literature and patents.

Many of such processes, however, proceed through a pathway in which a maleic acid derivative is converted into a polysuccinimide. When producing a cross-linked super-absorbent polymer, however, the involvement of such a polysuccinimide as an intermediate requires to separately conduct a polymerization reaction and a cross-linking reaction, resulting in complex steps.

On the other hand, production processes of copolymers, each of which also makes use of a maleic acid derivative as a raw material but relies upon simpler steps, are disclosed.

JP 60-203636 A (U.S. Patent No. 4,590,260) discloses a production process of a copolymer for use as an enzyme- immobilizing polymer. This production process uses, as raw materials, an amino acid along with a derivative of malic acid, maleic acid or fumaric acid. By heating them at 100 to 225□ □, the copolymer is obtained. Concerning the product, however, it is disclosed only that the product was found to contain an imide ring, a carboxylic acid, an amide and the like by infrared spectroscopy. There is no mention about cross-linked superabsorbent polymers.

Japanese Language Publication (PCT) No. 9-505614 A (U.S. Patent No. 5,408,029) discloses a technique, according which as raw materials, lysine which has been obtained by neutralizing lysine hydrochloride is used along with maleic acid and ammonia, followed by their reaction in the absence of an acid by way of a state of homogeneous solution to synthesize a copolymer (cross-linked superabsorbent polymer). The cross-linked superabsorbent polymer obtained by this production process, however, can absorb as little as 20 parts by weight of water per part by weight of the resin, and its water absorbency is not sufficient for practical use.

### Disclosure of the Invention

An object sought for attainment by the present invention is to provide a process for the production of a cross-linked superabsorbent polymer having excellent water absorbency.

Another object sought for attainment by the present invention is to provide a process for the production of a cross-linked superabsorbent polymer having excellent biodegradability.

A further object also sought for attainment by the present invention is to provide a process for producing a biodegradable, cross-linked superabsorbent polymer by simpler reaction steps.

The present inventors have proceeded with an extensive investigation to attain the above-described objects. As a result, it has been found that a cross-linked superabsorbent polymer having high water absorbency can be obtained by mixing a maleic acid derivative, which contains ammonia, with a cross-linking agent, conducting a reaction in the presence of an acid catalyst and then hydrolyzing the reaction product, leading to the completion of the present invention.

Namely, the subject matter of the present invention can be specified by the features described in the following paragraphs [1] to [23]:
[1] A process for the production of a cross-linked polymer, which comprises conducting a reaction in a reaction system which comprises:
   (A) at least one monomer selected from the group consisting of:
      (a-1) maleic anhydride and ammonia,
      (a-2) a dicarboxylic acid having 4 carbon atoms and ammonia,
      (a-3) a monoammonium salt and/or diammonium salt of a dicarboxylic acid having 4 carbon atoms,
      (a-4) a monoamide and/or diamide of a dicarboxylic acid having 4 carbon atoms, and
      (a-5) an imide having 4 carbon atoms;
   (B) a cross-linking agent; and
   (C) an acid.
[2] A process for the production of a cross-linked polymer as described in the above paragraph [1], which comprises conducting a two-stage reaction at 100 to 250°C and 250 to 350°C in a reaction system which comprises:
   (A) at least one monomer selected from the group consisting of:
      (a-1) maleic anhydride and ammonia,
      (a-2) a dicarboxylic acid having 4 carbon atoms and ammonia,
      (a-3) a monoammonium salt and/or diammonium salt of a dicarboxylic acid having 4 carbon atoms,
      (a-4) a monoamide and/or diamide of a dicarboxylic acid having 4 carbon atoms, and
      (a-5) an imide having 4 carbon atoms;
   (B) a polyamine; and
   (C) an acid.
[3] A process for the production of a cross-linked polymer as described in the above paragraph [1], which comprises the following steps:
   as step 1 (polymerization step), conducting primarily a polymerization reaction at 100 to 250°C in a reaction system which comprises:
      (A) at least one monomer selected from the group consisting of:
         (a-1) maleic anhydride and ammonia,
         (a-2) a dicarboxylic acid having 4 carbon atoms and ammonia,
         (a-3) a monoammonium salt and/or diammonium salt of a dicarboxylic acid having 4 carbon atoms,
         (a-4) a monoamide and/or diamide of a dicarboxylic acid having 4 carbon atoms, and
         (a-5) an imide having 4 carbon atoms,
      (B) a polyamine, and
      (C) an acid; and
   as step 2 (polymerization and cross-linking step), subjecting a reaction mixture, which has been obtained in step 1, primarily to a polymerization and cross-linking reaction at 250 to 350°C.
[4] A process for the production of a cross-linked polymer as described in any one of the above paragraphs [1] to [3], wherein the dicarboxylic acid having 4 carbon atoms is at least one dicarboxylic acid selected from the group consisting of dicarboxylic acids of the following chemical formulas (a-2-1) to (a-2-5): 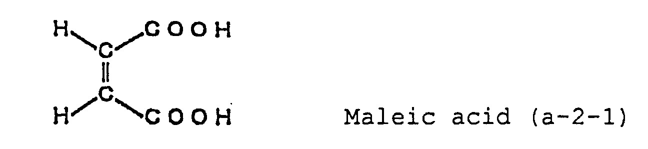 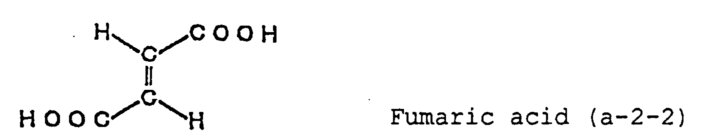 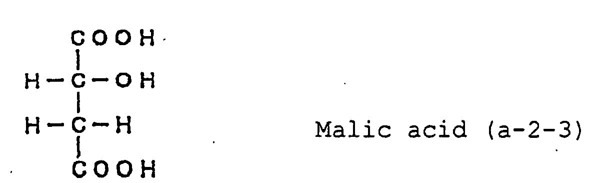 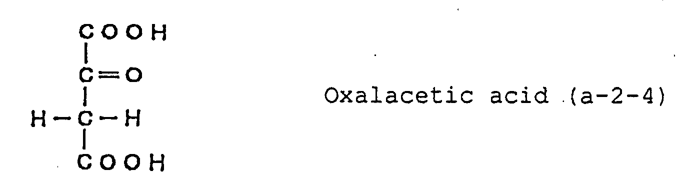 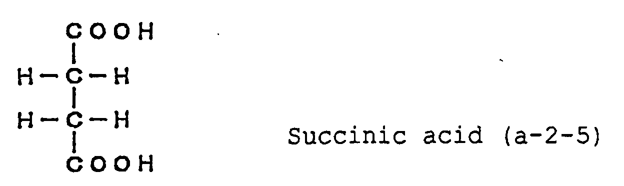
[5] A process for the production of a cross-linked polymer as described in any one of the above paragraphs [1] to [4], wherein the imide having 4 carbon atoms is at least one imide selected from the group consisting of imides of the following chemical formulas (a-5-1) to (a-5-4): 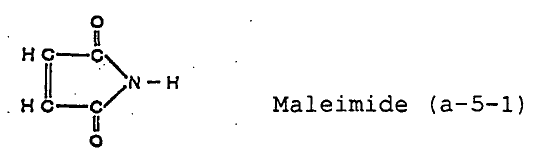 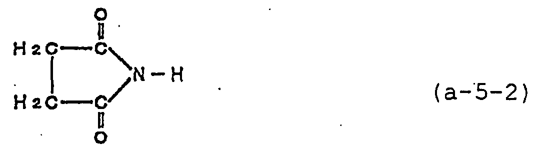 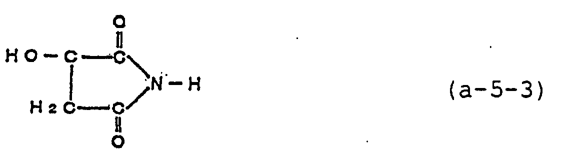 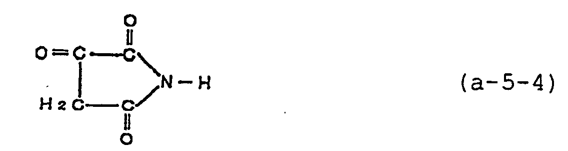
[6] A process for the production of a cross-linked polymer as described in any one of the above paragraphs [1] to [5], wherein the monoamide of the dicarboxylic acid having 4 carbon atoms is maleamic acid, and the imide having 4 carbon atoms is maleimide. 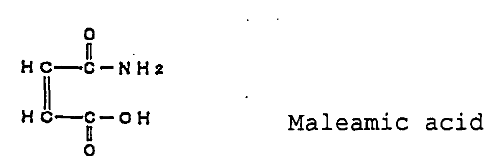 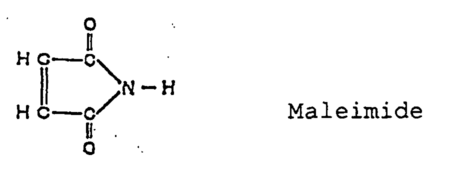
[7] A process for the production of a cross-linked polymer as described in any one of the above paragraphs [1] to [6], wherein the cross-linking agent is a polyamine and/or a polyol (polyhydric alcohol).
[8]A process for the production of a cross-linked polymer as described in the above paragraph [7], wherein the polyamine is a diamine.
[9] A process for the production of a cross-linked polymer as described in the above paragraph [7], wherein the polyamine is at least one polyamine selected from the group consisting of lysine, cystine, ornithine and alkylenediamine.
[10] A process for the production of a cross-linked polymer as described in the above paragraph [7], wherein the polyol (polyhydric alcohol) is a diol (dihydric alcohol).
[11] A process for the production of a cross-linked polymer as described in any one of the above paragraphs [1] to [10], wherein the acid is at least one acid selected from the group consisting of hydrochloric acid, a phosphorus oxyacid, a sulfur oxyacid, and a polyamine acid salt.
[12] A process for the production of a cross-linked polymer as described in the above paragraph [11], wherein the phosphorus oxyacid is at least one phosphorus oxyacid selected from the group consisting of orthophosphoric acid, pyrophosphoric acid, polyphosphoric acid, and phosphorus pentoxide.
[13]A process for the production of a cross-linked polymer as described in the above paragraph [11] or [12], wherein the sulfur oxyacid is at least one sulfur oxyacid selected from the group consisting of organic sulfonic acids having 1 to 20 carbon atoms.
[14] A process for the production of a cross-linked polymer as described in the above paragraph [11], wherein the sulfur oxyacid is at least one sulfur oxyacid selected from the group consisting of ethanesulfonic acid, methanesulfonic acid, and toluenesulfonic acid.
[15] A process for the production of a cross-linked polymer as described in the above paragraph [11], wherein the polyamine acid salt is an acid salt of a diamine.
[16]A process for the production of a cross-linked polymer as described in the above paragraph [11], wherein the polyamine acid salt is at least one polyamine acid salt selected from the group consisting of lysine hydrochloride, cystine hydrochloride, ornithine hydrochloride, and alkylenediamine hydrochloride.
[17] A process for the production of a cross-linked superabsorbent polymer, which comprises the following steps:
   as step 1, producing a cross-linked polymer by a production process described in any one of the above paragraphs [1] to [16]; and
   as step 2, hydrolyzing at least a part of imide rings in the cross-linked polymer, which has been produced in step 1, such that the cross-linked superabsorbent polymer is produced.
[18] A process for the production of a cross-linked superabsorbent polymer as described in the above paragraph [17], wherein the cross-linked superabsorbent polymer has, in at least a part of a molecule thereof, a recurring unit represented by the following chemical formula (1) and/or chemical formula (2): 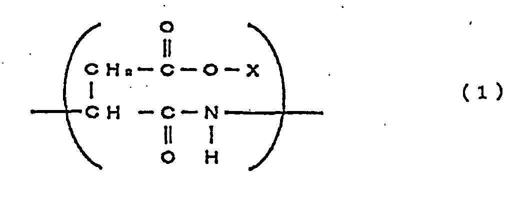 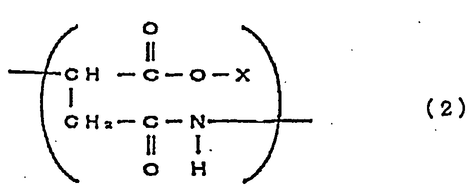 wherein Xs represent a hydrogen atom, an alkali metal ion, an alkaline earth metal ion, or an ammonium ion.
[19] A process for the production of a cross-linked superabsorbent polymer as described in the above paragraphs [17] or [18], wherein the cross-linked superabsorbent polymer has, in at least a part of a molecule thereof, a cross-linking structure represented by the following chemical formula (3): 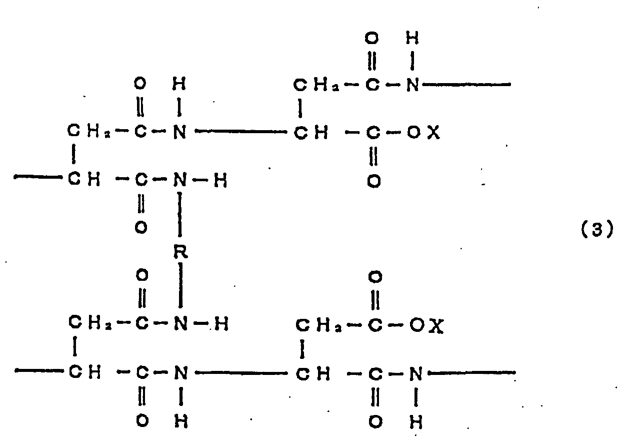 wherein R represents an aliphatic hydrocarbon group having 1 to 20 carbon atoms, an aromatic hydrocarbon group having 1 to 20 carbon atoms or a peptide chain having 1 to 10 amino acid residua, and Xs represent a hydrogen atom, an alkali metal ion, an alkaline earth metal ion or an ammonium ion.
[20]A process for the production of a cross-linked superabsorbent polymer as described in the above paragraph [18] or [19], wherein in the chemical formula (3), Xs represent Na (sodium) and/or K (potassium).
[21] A process for the production of a cross-linked superabsorbent polymer as described in the above-paragraph [19] or [20], wherein in the chemical formula (3), R is formed containing at least one residuum selected from the group consisting of a lysine residuum, cystine residuum, ornithine residuum and an alkylenediamine residuum.
[22] A process for the production of a cross-linked superabsorbent polymer as described in any one of the above paragraphs [18] to [21], wherein the cross-linked superabsorbent polymer has absorbency sufficient to absorb 20 to 200 parts by weight of physiological saline per part by weight of dry polymer.
[23] A process for the production of a cross-linked superabsorbent polymer as described in any one of the above paragraphs [18] to [21], wherein the cross-linked superabsorbent polymer has absorbency sufficient to absorb 50 to 2,000 parts by weight of distilled water part by weight of dry polymer.

The present invention can provide a process for the production of a cross-linked superabsorbent polymer having excellent water absorbency and biodegradability.

The present invention can also provide a process for the production of a biodegradable, cross-linked superabsorbent polymer by simpler reaction steps.

### Best Modes for Carrying Out the Invention

A description will hereinafter be made about embodiments of the present invention.

### [Cross-linked superabsorbent polymer]

The term "cross-linked superabsorbent polymer" as used herein shall be interpreted to include superabsorbent resins. In addition, the term "cross-linked superabsorbent polymer" as used herein shall also be interpreted to include cross-linked polyaspartic acids. A cross-linked superabsorbent polymer may be a copolymer the basic backbone structure of which has recurring units composed of aspartic acid structural units and structural units other than aspartic acid. When a cross-linked superabsorbent polymer is a copolymer, it can be any one of a block copolymer, a random copolymer and a graft copolymer.

No particular limitation is imposed on the number of recurring units each of which is composed of the aspartic acid structure, but recurring units of the aspartic acid structure may account generally for 1% or more, preferably for 10% or more based on the total number of recurring units which make up the molecule. In general, from the standpoint of biodegradability, the recurring units of the basic backbone structure of the cross-linked superabsorbent polymer may preferably consist of only aspartic acid structural units and/or a copolymer of aspartic acid and a cross-linking agent.

In aspartic acid structural units in the cross-linked superabsorbent polymer, the amide bonds may be either a-bonds or ß-bonds. Such a-bonds and ß-bonds are generally found together. No particular limitation is imposed on the manner of bonding.

The structure of the backbone of the cross-linked superabsorbent polymer may have a linear structure or a branched structure. No particular limitation is imposed on the molecular weight of the backbone structure part of the cross-linked superabsorbent polymer, but the higher the molecular weight, the more preferred. As the molecular weight of the backbone structure part becomes higher, the cross-linked superabsorbent polymer is provided with higher ability as a water absorbent material, a water retaining material or the like. In general, the molecular weight of the backbone structure part may be 5,000 or higher, preferably 10,000 or higher, more preferably 20,000 or higher, still more preferably 30,000 or higher, particularly preferably 50,000 or higher, most preferably 80,000 or higher.

The cross-linked superabsorbent polymer contains in side chains thereof carboxyl groups formed as a result of hydrolytic ring-opening of imide rings of a cross-linked polysuccinimide. Further, the cross-linked superabsorbent polymer may also contain side chains each of which has one or more hydroxyl, amino, alkyl and/or like groups. For the sake of biodegradability, these groups may preferably be bonded with aspartic acid structure segments in the cross-linked superabsorbent polymer generally through amide bonds, ester bonds or the like.

The carboxyl groups formed by the hydrolysis may each be either in a free form or in the form of a salt. Specific examples of ions capable of forming salts can include metal ions such as sodium, potassium and lithium ions; ammonium ions such as ammonium, tetramethylammonium, tetraethylammonium, tetrapropylammonium, tetrabutylammonium, tetrapentylammonium tetrahexylammonium ethyltrimethylammonium, trimethylpropyl-ammonium, butyltrimethylammonium, pentyltrimethylammonium, hexyltrimethylammonium, cyclohexyltrimethylammonium, benzyltrimethylammonium, triethylpropylammonium, triethylbutylammonium, triethylpentylammonium, triethylhexylammonium, cyclohexyltriethylammonium, and benzyltriethylammonium ions; and amine ions such as trimethylamine, triethylamine, tripropylamine, tributylamine, tripentylamine, trihexylamine, triethanolamine, tripropanolamine, tributanolamine, tripentanolamine, trihexanolamine, dimethylamine, diethylamine, dipropylamine, dibutylamine, dipentylamine, dihexyl-amine, dicyclohexylamine, dibenzylamine, ethylmethylamine, methypropylamine, butylmethylamine, methylpentylamine, methylhexylamine, methylamine, ethylamine, propylamine, butylamine, pentylamine, hexylamine, octylamine, decylamine, dodecylamine, and hexadecylamine ions.

The smaller the atomic weight or molecular weight of ions, the more preferred, because ions with a greater atomic weight or molecular weight correspondingly result in a greater molecular weight per monomer unit and hence in a smaller water absorption per unit. Further, when there is possibility of coming into contact with human body or the like, lower toxicity is more preferred. From these standpoints, use of sodium, potassium, lithium, ammonium or triethanolamine ions are preferred, and from the standpoint of cost too, use of sodium, potassium or ammonium ions is particularly preferred.

No particular limitation is imposed on the bonds of the cross-linked portions in the cross-linked superabsorbent polymer. Specific examples can include structures each of which is composed of an amide bond or an ester bond. These structures may be included either singly or in combination.

No particular limitation is imposed on the proportion of the cross-linked portions in the cross-linked superabsorbent polymer. The proportion of the cross-linked portions can be suitably determined depending on a crosslinking degree, which is determined by the' functionality and molecular weight of the cross-linking agent, and its application. Here, the term "cross-linking degree" as used herein is defined to indicate the distance or the number of constituent monomer units between adjacent cross-links or the proportion of cross-linked portions relative to the polymer backbone.

In general, an excessively large proportion of cross-linking portions results in an unduly high cross-linking degree and hence in a cross-linked superabsorbent polymer with a lowered water absorbency, whereas an excessively small proportion of cross-linking portions leads to an unduly low cross-linking degree and eventually to a resin which has water solubility and cannot exhibit water absorbency. Accordingly, the amount of the cross-linking agent can be determined as needed to achieve an appropriate cross-linking degree. In general, the number of recurring units having cross-linked portions may be set preferably at 0.001 to 50%, more preferably at 0.01 to 30%, still more preferably at 0.1 to 20%, especially preferably at 0.5 to 15%, most preferably at 1 to 10%, all based on the total number of recurring units in the whole polymer.

### [Cross-linked polymer]

The term "cross-linked polymer" as used herein means a polymer having a precursor structure which forms the above-described, cross-linked superabsorbent polymer. Specifically, the cross-linked polymer contains in at least parts thereof an imide ring structure segments and cross-linked portions. The cross-linked polymer-in the present invention practically exhibits no water absorbency or has water absorbency lower than the cross-linked superabsorbent polymer.

### [Dicarboxylic acid having 4 carbon atoms]

The term "dicarboxylic acid having 4 carbon atoms" as used herein embraces the concept of the term "C₄ dicarboxylic acid" commonly employed in the technical field of biochemistry.

The term "dicarboxylic acid having 4 carbon atoms" as used herein embraces, for example, the dicarboxylic acids having 4 carbon atoms and their acid anhydrides, which are described in "§12 Tricarboxylic Acid Cycle" (PP 346-363), "§15.12 C₄ Pathway(Hatch-Slack Pathway)" (PP 437-440), etc. of "Biochemistry by Conn & Stumpf, 5^{th} Edition" [written by Conn, Stumpf, Bruening & Doi, K.K. Tokyo Kagaku Dozin (1988)].

Further, the term "dicarboxylic acid having 4 carbon atoms" as used herein also encompasses, for example, the dicarboxylic acids having 4 carbon atoms and their acid anhydrides, which are described in "§4.3.2 Szent-Györgyi C₄-Dicarboxylic Acid Pathway" (PP 55-56), "§4.3.3 Krebs Cycle" (PP 56-57), etc. of "Biochemistry" [written in Japanese by Kosaku Maruyama, SHOKABO Publishing Co., Ltd. (1977)].

### [Raw material(s) for forming the basic backbone structure of the cross-linked superabsorbent polymer]

As raw material(a) for forming the basic backbone structure of the cross-linked superabsorbent polymer, the present invention uses at least one monomer selected from the group consisting of (i) maleic anhydride and ammonia, (ii) a dicarboxylic acid having 4 carbon atoms and ammonia, (iii) a monoammonium salt and/or diammonium salt of a dicarboxylic acid having 4 carbon atoms, (iv) a monoamide and/or diamide of a dicarboxylic acid having 4 carbon atoms, and (v) an imide having 4 carbon atoms.

### [Cross-linking agent]

No particular limitation is imposed on the cross-linking agent for use in the present invention insofar as it is a polyfunctional compound capable of forming bonds at the above-described crosslinking portions. Illustrative are polyfunctional compounds such as polyamines and polyols (polyhydric alcohols). Concrete examples can include aliphatic polyamines such as hydrazine, ethylenediamine, propylenediamine, 1,4-butanediamine, pentamethylenediamine, hexamethylenediamine, heptamethylenediamine, octamethylene-diamine, nonamethylenediamine, decamethylenediamine, undecamethylenediamine, dodecamethylenediamine, tetradecamethylenediamine, hexadecamethylenediamine, 1-amino-2,2-bis(aminomethyl)butane, tetraaminomethane, diethylenetriamine and triethylenetetramine; alicyclic polyamines such as norbornenediamine, 1,4-diaminocyclohexane, 1,3,5-triaminocyclohexane and isophoronediamine; aromatic polyamines such as phenylenediamine, tolylenediamine and xylylenediamine; polyamines such as basic amino acids, compounds formed as a result of bonding of one or more molecules of monoamino compounds through one or more disulfide bonds, such as cystamine, and derivatives thereof; polyols (polyhydric alcohols) such as ethylene glycol, propylene glycol, polyethylene glycol and polypropylene glycol; protein constituent amino acids led by lysine, cystine and ornithine; and their salts and esters.

Among these, preferred cross-linking agents are those having less odor and high reactivity, that is, lysine, cystine, ornithine, cystamine, 1,4-butanediamine, heptamethylene-diamine and hexamethylenediamine.

The cross-linking agent is used in an amount sufficient to form the above-described number of recurring units having cross-linked portions.

### [Acid catalyst]

Upon production of the cross-linked superabsorbent polymer, at least one acid selected from the group consisting of hydrochloric acid, phosphorus oxyacids and sulfur oxyacids is used as an acid catalyst.

Phosphorus oxyacids specifically comprise orthophosphoric acid, pyrophosphoric acid, polyphosphoric acid, phosphorus pentoxide, and combinations thereof. As a sulfur oxyacid, at least one sulfur oxyacid selected from a group of organic sulfonic acids having 1 to 20 carbon atoms. Specific usable examples can include methanesulfonic acid, ethane-sulfonic acid and toluenesulfonic acid.

The amount of the acid catalyst to be used upon production of the cross-linked superabsorbent polymer may preferably be in a range of from 0.001 to 500 parts by weight, more preferably from 0.01 to 100 parts by weight, especially preferably from 0.1 to 50 parts by weight, most preferably from 1 to 20 parts by weight, based on 100 parts by weight of the raw material monomer(s). If the acid catalyst is used in a smaller amount, the effect of the acid catalyst cannot be fully brought about so that a cross-linked superabsorbent polymer of lower absorbency is formed with a reduced yield. If the acid catalyst is used conversely in a greater amount, a cross-linked superabsorbent polymer is formed with marked coloring and in some instances, with modifications.

### [Method of introduction of the acid catalyst]

Upon conducting the reaction, it is preferred to bring the above-described raw material(s), cross-linking agent and acid catalyst into a thoroughly mixed form.

The mixing is performed in the presence or absence of a solvent by using the raw material(s) and acid catalyst in the form of solids or a solution. It is, however, preferred to bring the interior of the system into an atmosphere the water content of which is lowered as much as possible if the acid catalyst and the raw material(s) come into contact with each other.

As a preferred method for the introduction of the acid catalyst, the acid catalyst may be used in the form of the salt of the cross-linking agent. An acid catalyst can be introduced as the salt of a cross-linking agent, for example, lysine hydrochloride, an alkylenediamine hydrochloride or the like. In this case, the raw material(s) and the salt of the cross-linking agent may be mixed together as fine powdery solids. As an alternative, the salt of the cross-linking agent can be added to the raw material(s), which is(are) in a molten form, such that the raw material(s), cross-linking agent and acid catalyst can be brought into a thoroughly mixed form.

The acid catalyst may be introduced by bringing it in a gaseous form into contact with the raw material(s). When the acid catalyst is brought into a gaseous form, it is preferred to introduce the acid catalyst in a form diluted in an inert gas, for example, nitrogen, argon or carbon dioxide or the like so that coloring or a modification of the resulting product can be prevented. For example, hydrochloric acid gas, in a form diluted in the above-described inert gas, may be brought into contact with the raw material(s). Further, an inert gas with the acid catalyst contained therein may be supplied continuously or discontinuously to introduce the acid catalyst.

### [Reaction temperature]

In the present invention, the reaction may be conducted preferably at 100 to 350°C, more preferably at 130 to 320°C. In general, an unduly low temperature does not allow the reaction to proceed fully, leading to reductions in water absorbency and yield. An unduly high temperature, on the other hand, generally causes marked coloring, modifications and the like of the reaction product.

The reaction in the present invention can be divided primarily into a polymerization reaction and a cross-linking reaction. Practically, the polymerization reaction and the cross-linking reaction proceed concurrently. However, the reaction can be divided into a stage, in which the polymerization reaction takes place primarily, and another stage, in which the cross-linking reaction takes place predominantly, by setting the reaction temperature within the above-described range. A reaction product available after the cross-linking reaction has proceeded fully is insoluble in solvents owing to its high molecular weight. As a result of determination of the progress of the crosslinking reaction on the basis of the solubility of the product in a solvent, it has been ascertained as a general rule that at reaction temperatures of from 100 to 250°C, the polymerization reaction proceeds primarily and that at reaction temperatures of from 250 to 350°C, the cross-linking reaction proceeds predominantly.

### [Reaction pressure]

The reaction in the present invention is conducted under environmental pressure or at a desired elevated pressure. The pressure may preferably be 0.00001 to 50 MPa, with 0.0001 to 5 MPa being more preferred and 0.001 to 0.5 MPa being still more preferred. An unduly low pressure generally causes marked bubbling in the course of the reaction, thereby making it difficult to proceed with the reaction further. An unduly high pressure, on the other hand, generally requires a high-pressure apparatus so that difficulties are encountered in designing an apparatus if mass production is desired.

### [Reaction time]

A suitable reaction time is selected depending on the reaction temperature. In general, however, the reaction temperature is preferably 15 hours or shorter, more preferably 8 hours or shorter, still more preferably 3 hours or shorter. Selection of an appropriate reaction time can prevent modifications and/or coloring and can produce a cross-linked superabsorbent polymer with good water absorbency and/or with good yield.

### [Reaction procedures]

The reaction mixture, which is composed of the raw material(s), the cross-linking agent and the acid catalyst, generally exhibits a reaction state that it once melts, may then undergoes bubbling in some instances, and eventually solidifies again. As temperature conditions for causing such changes in state under environmental pressure, the melting and the bubbling generally take place at 130 to 160°C and at 160°C and higher, respectively, although such temperature conditions vary depending on the composition of the raw material(s). If bubbling of the reaction mixture takes place during the reaction, the volume of the reaction mixture, depending on the reaction conditions, may abruptly expand, resulting in a volume increase as much as 3 to 20 times or so. With a view to coping with changes in reaction state, the reaction may, therefore, be conducted by changing the temperature in two or more stages of different temperature levels or by setting it at temperature levels having a continuous gradient. Specifically, the reaction may be conducted by dividing it into two stages, for example, by effecting the first-stage reaction in a temperature range of from 100 to 250°C and the second-stage reaction in a temperature range of from 250 to 350°C.

It is preferred to conduct the reaction under such an atmosphere that the interior of the reaction system has been purged with an inert gas such as nitrogen, argon or carbon dioxide and is substantially free of oxygen or water.

The inert gas can also be used as a heating medium by bringing it into contact with the reaction mixture while causing it to continuously flow through the reaction system. The inert gas can also be used to maintain the reaction mixture as a homogeneous mixture.

The reaction can be practiced either in the presence of a solvent or in the absence of a solvent. It is, however, preferred to practice the reaction in the absence of a solvent.

From the standpoint of heat and/or material transfer, it is preferred to continue the reaction while maintaining the reaction mixture in a powdery form by crushing or grinding the reaction mixture to increase its specific surface area after the reaction mixture is once caused to melt and is then allowed to solidify.

### [Reaction apparatus]

No particular limitation is imposed on a reaction apparatus adapted to perform the reaction procedures, and any apparatus can be used insofar as mixing and heating of the raw materials, such as those described above, can be conducted continuously and/or batchwise. The mixing and heating of the raw materials may be conducted separately in two or more apparatuses. Desired apparatus or apparatuses can be used, specifically including: mixing tanks, dryers each of which is equipped with a crushing and grinding mechanism, drier each of which is equipped with a planetary mixer, mixing dryers, and single-screw or twin-screw kneaders.

If grinding of a solid is needed, the grinding can be conducted continuously or batchwise by using a dry and/or wet grinding machine. In some instances, classification may be conducted using a dry and/or wet classifier. As an alternative, an apparatus equipped with a grinding mechanism and a classifying mechanism in combination may also be used. If the average particle size (average particle diameter) of the thus-ground solid is excessively small, granulation may be conducted in a self-granulation system and/or a forced granulation system.

Heating of the solidified reaction product can be effected continuously or batchwise by using at least one apparatus selected from a fluidized-bed reactor, a moving-bed reactor, a fixed-bed reactor, a mixing drier or the like. If cohesion or fusion-bonding of particles themselves takes place, it is generally preferred to use an apparatus having mixing action and crushing action on the particles.

### [Hydrolyzing procedure]

After completion of the above-described reaction procedures, a hydrolyzing procedure is conducted continuously and/or batchwise on the resultant solid. This hydrolyzing procedure is primarily to subject the imide ring structure segments, which have been formed as a result of the ring closure of the aspartic acid structure segments, to ring opening.

The hydrolyzing procedure is conducted under basic conditions by suspending the resultant solid in a solvent subsequent to the reaction procedures. The pH is adjusted relying upon the concentration of an aqueous alkaline solution, and may range from pH 7.5 to 13, preferably from pH 9 to 12. An excessively high pH generally causes hydrolysis of amide bonds, and results in a resin lowered in water absorbency and yield. An unduly low pH, on the other hand, generally leads to a slower hydrolysis reaction, and is not practical.

No particular limitation is imposed on the aqueous alkaline solution for use in the hydrolyzing procedure. Specific examples can include aqueous solutions of alkali metal hydroxides such as sodium hydroxide, potassium hydroxide and lithium hydroxide; aqueous solutions of alkali metal carbonates such as sodium carbonate, potassium carbonate and lithium carbonate; aqueous solutions of alkali metal hydrogen-carbonates such as sodium hydrogencarbonate and potassium hydrogencarbonate; aqueous solutions of alkali metal acetates such as sodium acetate and potassium acetate; aqueous solutions of alkali metal salts such as sodium oxalate; and aqueous ammonia. Among these, aqueous solutions of sodium hydroxide and potassium hydroxide are preferred for their low prices.

The hydrolyzing procedure can be conducted preferably at 5 to 100°C, with 10 to 60°C being particularly preferred. An excessively high temperature generally causes hydrolysis of amide bonds, resulting in a resin lowered in water absorbency and yield. An unduly high temperature, on the other hand, generally leads to a slower hydrolysis reaction, and is not practical.

The hydrolyzing procedure is generally conducted preferably for 1 minute to 30 hours, more preferably for 5 minutes to 15 hours, still more preferably for 10 minutes to 10 hours, especially preferably for 30 minutes to 5 hours, although this reaction time varies depending on the reaction conditions. An excessively short reaction time generally results in insufficient hydrolysis and hence in a reduction in water absorbency. An unduly long reaction time, on the other hand, generally leads to occurrence of hydrolysis of amide bonds and thus to a resin lowered in water absorbency and yield.

The solvent in the hydrolyzing procedure is either water alone or a mixed solvent of water and a poor solvent and/or a salt. To heighten the volumetric efficiency, it is preferred to use the solvent in an amount as much as 1 to 20 times by weight, especially 1 to 5 times by weight the cross-linked super-absorbent polymer to be formed.

No particular limitation is imposed on the poor solvent to be used. Illustrative are alcohols such as methanol, ethanol, propanol, isopropanol, butanol, 2-methoxyethanol and 2-ethoxyethanol; glycols such as ethylene glycol, diethylene glycol, triethylene glycol, propylene glycol and dipropylene glycol; ketones such as acetone, methyl ethyl ketone and methyl isobutyl ketone; cyclic ethers such as tetrahydrofuran and dioxane; N,N-dimethylformamide, N,N-dimethyl acetamide, N-methylpyrrolidone, N,N'-dimethylimidazolidinone, dimethylsulfoxide and sulfolane. Among these, methanol, ethanol, propanol and isopropanol are preferred in that, upon drying the hydrolyzed product as a cross-linked superabsorbent polymer, they permit particularly easy drying and they do not tend to remain in the composition after the drying.

No particular limitation is imposed on the salt to be used. Illustrative are metal salts, organic base salts and oxides of hydrochloric acid, sulfuric acid, nitric acid, phosphoric acid, carbonic acid, organic sulfonic acids and organic carboxylic acids. Examples of metals in the metal salts can include lithium, sodium, potassium, aluminum and potassium. Incidentally, the salt may be a salt formed by neutralization of an acid catalyst in the course of the hydrolyzing procedure.

The concentration of water in the solvent as determined based on the two components of water and the poor solvent without taking into consideration the salt in the solvent may preferably range from 5 to 100 wt.%, with a range of from 20 to 80 wt.% being more preferred and a range of from 40 to 60 wt.% being still more preferred. An excessively low water concentration may generally result in a slow progress of the hydrolysis and in some instances, may lead to occurrence of polymer flocculation in the system so that agitation may be rendered difficult. An excessively high water concentration, on the other hand, may generally lead to formation of a gel-like mixture in the system so that agitation may be hampered.

The concentration of the salt in the solvent, which is composed of water and the salt or is composed of water, the poor solvent and the salt, may preferably be 20 wt.% or lower, with 10 wt.% or lower being more preferred. In general, an unduly low concentration of the salt may not allow the salt to exhibit its effects sufficiently, whereas an excessively high concentration of the salt may cause the salt to remain in the product.

### [Post-treatment of the cross-linked superabsorbent polymer]

No particular limitation is imposed on the-treatment of the cross-linked superabsorbent polymer after the hydrolyzing procedure. For example, procedures such as neutralization, salt interchange, drying, purification, granulation and surface treatment may be conducted as needed. A description will hereinafter be made especially about neutralization treatment and drying.

### (i) Neutralization treatment of cross-linked superabsorbent polymer

Neutralization treatment of the cross-linked super-absorbent polymer can be conducted as needed. It is, however, to be noted that a reaction mixture available after the hydrolyzing procedure, which contains the cross-linked superabsorbent polymer, is generally alkaline. If there is a possibility that the reaction mixture may come into contact with human body or the like, it is preferred to add an acid or the like to the reaction mixture such that the reaction mixture is neutralized. Although no particular limitation is imposed on the degree of neutralization, it is generally preferred to perform the neutralization to such an extent that carboxyl groups, each of which is in the form of a salt, account for 0 to 50%, preferably 0 to 30% based on the total number of whole aspartic acid structure units in the molecule of the cross-linked superabsorbent polymer.

No particular limitation is imposed on the manner of the neutralization treatment. it is, however, the common practice to adjust the pH by adding an acid subsequent to the hydrolysis reaction. Specific examples of the acid can include hydrochloric acid, sulfuric acid, nitric acid, carbonic acid, phosphoric acid, and carboxylic acids.

### (ii) Drying of cross-linked superabsorbent polymer

No particular limitation is imposed on the drying method of the cross-linked superabsorbent polymer. Drying is conducted batchwise or continuously under environmental pressure or reduced pressure. Described specifically, the drying procedure can be conducted using at least one apparatus selected from the group consisting of material-fixed dryers, material-moving dryers, material-mixing dryers, hot-air material-moving dryers, cylindrical dryers, infrared dryers, and high-frequency dryers.

The preferred temperature of the material during the drying procedure may generally range from 20 to 200°C, with 50 to 120°C being more preferred. An excessively high temperature generally causes a reduction in cross-linking degree, leading to a reduction in water absorbency. An excessively low temperature, on the other hand, requires a long time for drying, leading to a need for a large apparatus.

After the drying procedure, the amount of the solvent (including water) contained in the cross-linked superabsorbent polymer is adjusted as needed depending on the application. The content of the solvent may-be adjusted preferably to 50 parts by weight or lower, more preferably to 10 parts by weight or lower, still more preferably to 5 parts by weight or lower, especially preferably to 2 parts by weight or lower, most preferably to 1 part by weight or lower, all per 100 parts by weight of the cross-linked superabsorbent polymer.

To the cross-linked superabsorbent polymer subjected to the drying treatment, granulation treatment, surface cross-linking treatment and/or the like may be applied further as needed.

### [Water absorption of the cross-linked superabsorbent polymer]

As a water absorption in the present invention, a value determined under pressureless conditions shall be employed.

A cross-linked superabsorbent polymer available in the present invention is a resin which can absorb physiological saline in an amount as much as preferably 20 parts by weight or more, more preferably 30 parts by weight or more per part by weight of the resin. The term "physiological saline" as used herein means an aqueous solution which contains sodium chloride at a concentration of 0.9 wt.%.

As another index, the cross-linked superabsorbent polymer available in the present invention is a resin which can absorb distilled water in an amount as-much as preferably 30 parts by weight or more, more preferably 50 parts by weight or more, especially preferably 100 parts by weight or more per part by weight of the resin.

### [Biodegradability of the cross-linked superabsorbent polymer]

The biodegradability of each cross-linked superabsorbent polymer in the present invention was measured by the standard biodegradation test (ISO FDIS 14855). A biodegradation rate is a carbon-based degradation rate [wt.%-carbon] obtained by dividing the amount of CO₂, which has been formed during a degradation test, with the amount of total carbon in a sample as measured by elemental analysis.

In general, the biodegradation rate of each cross-linked superabsorbent polymer produced by the production process of the present invention may be preferably 10 [wt.%-carbon] or greater, more preferably 20 [wt.%-carbon] or greater, still more preferably 30 [wt.%-carbon] or greater, especially preferably 40 [wt.%-carbon] or greater.

### [Shape and particle size of the cross-linked superabsorbent polymer]

The cross-linked superabsorbent polymer can be used in various forms such as crushed pieces of irregular shapes, spheres, grains, granules, granulated particles, flakes, lumps, pearls, fine powder, fibers, rods, films and sheets. Depending on the application purpose, a preferred form can be chosen. It can also be in the form of a fibrous base material, a porous body, an expanded body or a granulated material.

No particular limitation is imposed on the particle size (average particles size) of the cross-linked superabsorbent polymer, although it may be preferred to adjust the particle size depending on the application purpose.

In the case of disposable diapers, for example, an average size of from 100 to 1,000 µm is preferred, with a range of from 150 to 600 µm being more preferred, because a high water absorption speed and avoidance of gel blocking are desired. When employed in a form incorporated in another resin, for example, a waterblocking material, a range of from 1 to 10 µm is preferred. In the case of a water-holding material for agricultural and horticultural applications, a range of from 100 µm to 5 mm is preferred in view of its dispersibility in soil.

### [Form of use of the cross-linked superabsorbent polymer]

No particular limitation is imposed on the form of use of the cross-linked superabsorbent polymer. It can be used either singly or in combination with another material.

No particular limitation is imposed on the-molded or otherwise formed product of the cross-linked superabsorbent polymer. It can be used in the form of solid matters, sheets, films, fibers, nonwoven fabrics, expanded bodies, rubber and the like. Further, no particular limitation is imposed on their molding or forming methods.

The cross-linked superabsorbent polymer can also be used in the form of a composite material combined with another material. Although no particular limitation is imposed on the structure of the composite material, it can be formed into a sandwich structure by holding it between pulp layers, nonwoven fabrics or the like; it can be formed into a multilayer structure by using a resin sheet or film as a base material; or it can be formed into a double-layer structure by casting it on a resin sheet. For example, forming of the cross-linked super-absorbent polymer into a sheet-like shape can provide a superabsorbent sheet which may be a superabsorbent film.

Further, the cross-linked superabsorbent polymer can also be blended with one or more other cross-linked super-absorbent polymers as needed. It is also possible to add, as needed, inorganic compounds such as salt, colloidal silica, white carbon, ultrafine silica and titanium oxide powder; and organic compounds such as chelating agents. Moreover, it is also possible to mix oxidizing agents, antioxidants, reducing agents, ultraviolet absorbers, antibacterial agents, fungicides, mildewproofing agents, fertilizers, perfumes, deodorants, pigments and the like.

The cross-linked superabsorbent polymer can also be used in the form of a gel or solid matter. It is used in a gel form, for example, when employed in water-holding materials for agricultural and horticultural applications, life extenders for cut flowers, gel-type aromatics, gel-type deodorants and the like; and it is used in a solid form when employed as an absorbent for disposable diapers.

### [Applications of the cross-linked superabsorbent polymer]

No particular limitation is imposed on the applications of the cross-linked superabsorbent polymer. It can be used in any application fields where conventional cross-linked superabsorbent polymers are usable.

Illustrative specific applications can include sanitary products such as disposable diapers, sanitary supplies, breast milk pads, and disposable dustcloths; medical supplies such as wound-protecting dressing materials, medical underpads, and cataplasms; daily necessaries such as pet sheets, portable toilets, gel-type aromatics, gel-type deodorants, moisture superabsorbent fibers, and disposable pocket heaters; toiletry products such as shampoos, hair-setting gels, and humectants; agricultural and horticultural products such as agricultural and horticultural water-holding materials, life extenders for cut flowers, floral foams (fixing bases for cut flowers), seedling nursery beds, solution culture vegetation sheets, seed tapes, fluidized seedling media, and dew-preventing agricultural sheets; food packaging materials such as freshness-retaining materials for food trays, and drip absorbent sheets; materials for use during transportation, such as cold insulators, and water absorbent sheets for use during the transportation of fresh vegetables; construction and civil engineering materials such as dew-preventing construction materials, sealing materials for civil engineering and construction, lost circulation preventives for shield tunneling, concrete admixtures, gaskets and packings; materials for electric and electronic equipment, such as sealing materials for fiber optics and electronic equipment, waterblocking materials for communication cables, and ink jet recording papers; water treatment materials, such as sludge solidifiers, and dehydrating or water-eliminating agents for gasoline and oils; textile-printing sizing materials; water-swelling toys; artificial snow; sustained-release fertilizers; sustained-release agrichemicals; sustained-release drugs; humidity regulating materials; and antistatic agents.

The present invention will hereinafter be described more specifically based on Examples. It should however be borne in mind that the present invention is by no means limited by the following Examples.

### [Determination of water absorption]

The measurement of each water absorption was conducted using distilled water and physiological saline as liquids to be absorbed.

About 0.05 g of a dried, cross-linked superabsorbent polymer in the case of distilled water or about 0.1 g of a dried, crosslinked superabsorbent polymer in the case of physiological saline was placed in a tea bag made of nonwoven fabric (80 mm x 50 mm). The tea bag was immersed in the corresponding liquid (physiological saline or distilled water), in which the polymer was allowed to swell for 40 minutes. The tea bag was then pulled out. After the liquid was allowed to drip down for 10 seconds, the liquid was sucked out for 10 seconds under capillary action on 24 sheets of tissue paper which was overlaid one over the other. The weight of the tea bag with the swollen polymer contained therein was measured. The above procedures were likewise repeated using, as a blank, a similar tea bag only. The weight of the blank and the weight of the cross-linked superabsorbent polymer were subtracted from the weight of the tea bag with the swollen polymer contained therein. A value obtained by dividing the difference with the weight of the cross-linked superabsorbent polymer, that is, a water absorption per unit weight of the cross-linked superabsorbent polymer (g/g-cross-linked superabsorbent polymer). Incidentally, the physiological saline was a 0.9 wt.% aqueous solution of sodium chloride.

### [Measurement of biodegradability]

The biodegradability of each cross-linked superabsorbent polymer in the present invention was measured by the standard biodegradation test (ISO FDIS 14855). A biodegradation rate is a carbon-based degradation rate [wt.%-carbon] obtained by dividing the amount of CO₂, which has been formed during a degradation test, with the amount of total carbon in a sample as measured by elemental analysis.

### Example 1

Fine powdery maleamic acid (30.0 g, 0.261 mol) and lysine monohydrochloride (4.76 g, 0.0261 mol), which was also in a fine powdery form, were charged into a pear-shaped flask of one liter capacity, and were agitated and mixed in their solid forms.

The flask with the raw materials charged therein was mounted on a rotary evaporator. Subsequent to drying at 80°C and 5 mmHg for 2 hours, heating was initiated while causing nitrogen to flow through the flask. When the oil bath temperature arose to 145 to 155°C, the reaction mixture gradually melted so that it was agitated in the form of a paste. Heating was continued and, when the temperature reached 170 to 180°C upon elapsed time of 20 minutes, bubbling took place through the reaction mixture. After heating was continued for 20 minutes while maintaining the oil bath temperature at 180 to 190°C, the flask was allowed to cool down.

After the flask was allowed to cool down to room temperature, the reaction product (33.3 g) which had solidified in a bubbled form was taken out of the flask. Subsequent to grinding, dry classification was conducted using sieves the openings of which were 106 µm and 212 µm, respectively. A portion (6.0 g) of the classified reaction product was charged into a tubular reactor. The tubular reactor was placed in an oven, and at room temperature and environmental pressure, nitrogen was caused to flow through the reactor. Thirty minutes later, heating was initiated. About seven minutes later, the temperature inside the oven reached 290°C, at which the reaction product was heated for 60 minutes in its powder form. The reactor was then allowed to cool down.

Subsequent to the cooling, the reaction product (4.9 g) was recovered from the tubular reactor. The reaction product was then placed together with water (30 g) in a 200-mL beaker, followed by mixing into a slurry. At room temperature, a 25 wt.% aqueous solution of sodium hydroxide was added dropwise into the beaker to conduct hydrolysis while controlling the pH at 11.0 to 12.0 inside the beaker. As the viscosity inside the beaker progressively increased in the course of the hydrolysis, methanol was added dropwise as a poor solvent as needed to prevent gelation. Four hours later, neutralization was conducted with a 7 wt.% aqueous solution of hydrochloric acid until the pH inside the beaker dropped to 7.0.

Subsequent to the neutralization, the contents of the beaker were transferred to a 500-mL beaker, followed by the addition of further methanol to have the product precipitated.

After the suspension inside the beaker was removed by decantation, water was added to gelatinize the product. The gelatinized product was caused to precipitate again with methanol, and the liquid inside the beaker was removed by decantation. After this operation was repeated twice, the product was allowed to precipitate in methanol (300 mL), followed by filtration. Subsequent to the filtration, the product was dried for 5 hours in a vacuum drier which was controlled at 60°C, whereby a cross-linked superabsorbent polymer (2.5 g) was obtained. The cross-linked superabsorbent polymer was subjected to classification, and with respect to the resin in a particle size (particle diameter) range of from 100 to 400 µm, its water absorption was measured.

### <Water absorption>

Water absorption for distilled water:
110 g/g-cross-linked superabsorbent polymer

Water absorption for physiological saline:
34 g/g-cross-linked superabsorbent polymer

### Example 2

The procedures of Example 1 was repeated in a similar manner except that the time of the reaction at 290°C in the oven was changed to 70 minutes. As a result, a cross-linked superabsorbent polymer (3.0 g) was obtained.

### <Water absorption>

Water absorption for distilled water:
93 g/g-cross-linked superabsorbent polymer

Water absorption for physiological saline:
32 g/g-cross-linked superabsorbent polymer

### Example 3

A fine powdery mixture, which consisted of maleamic acid (25.0 g, 0.217 mol) and maleamide (3.0 g, 0.0263 mol), and lysine monohydrochloride (4.00 g, 0.0219 mol), which was also in a fine powdery form, were charged into a pear-shaped flask of one liter capacity, and were agitated and mixed in their solid forms.

The flask with the raw materials charged therein was mounted on a rotary evaporator, and drying was conducted at 80°C and 5 mmHg for 2 hours. Under a nitrogen atmosphere, heating was initiated at an oil bath temperature of from 145 to 155°C. Five minutes later, the reaction mixture gradually melted so that it was agitated in the form of a paste. Heating of the oil bath was then started. When the temperature reached 170 to 180°C upon elapsed time of 20 minutes, bubbling took place through the reaction mixture. Heating was then continued for 20 minutes while maintaining the oil bath temperature at 180 to 190°C, and thereafter, the flask was allowed to cool down.

After the flask was allowed to cool down to room temperature, the reaction product (30.1 g) which had solidified in a bubbled form was taken out of the flask. Subsequent to grinding, dry classification was conducted using sieves the openings of which were 106 µm and 212 µm, respectively. A portion (6.0 g) of the classified reaction product was charged into a tubular reactor. The tubular reactor was placed in an oven, and at room temperature and environmental pressure, nitrogen was caused to flow through the reactor. Thirty minutes later, heating was initiated. About seven minutes later, the temperature inside the oven reached 285°C, at which the reaction product was heated for 70 minutes in its powder form. The reactor was then allowed to cool down.

Subsequent to the cooling, the reaction product (5.0 g) was recovered from the tubular reactor. Hydrolysis and drying were then conducted in a similar manner as in Example 1, whereby a cross-linked superabsorbent polymer (3.3 g) was obtained. The cross-linked superabsorbent polymer was subjected to classification, and with respect to the resin in a particle size (particle diameter) range of from 100 to 400 µm, its water absorption was measured.

### <Water absorption>

Water absorption for distilled water:
121 g/g-cross-linked superabsorbent polymer

Water absorption for physiological saline:
37 g/g-cross-linked superabsorbent polymer

### Example 4

Maleic anhydride (25.6 g, 0.261 mol) was dissolved in water, followed by the addition of diluted aqueous ammonia (ammonia content: 5 wt.%) (88.8 g). The resulting homogeneous solution was dried at 80 to 90°C under reduced pressure. A solid was recovered while crushing the same, followed by the addition of lysine monohydrochloride (4.86 g, 0.0261 mol). After the resulting powder was mixed in a mortar, the powder was charged again into a flask of one liter capacity.

The flask with the raw materials charged therein was mounted on a rotary evaporator. Subsequent to drying at 80°C and 5 mmHg for 2 hours, heating was initiated while causing nitrogen to flow through the flask.

The subsequent procedures were conducted in a similar manner as in Example 1, whereby a cross-linked superabsorbent polymer (2.4 g) was obtained.

### <Water absorption>

Water absorption for distilled water:
95 g/g-cross-linked superabsorbent polymer

Water absorption for physiological saline:
32 g/g-cross-linked superabsorbent polymer

### Example 5

Maleic anhydride (25.0 g, 0.255 mol) was dissolved in water, followed by the addition of diluted aqueous ammonia (ammonia content: 5 wt.%) (93.3 g). The resulting homogeneous solution was dried at 80 to 90°C under reduced pressure. A solid was recovered while crushing the same, followed by the addition of lysine monohydrochloride (4.42 g, 0.0242 mol). After the resulting powder was mixed in a mortar, the powder was charged again into a flask of one liter capacity.

The flask with the raw materials charged therein was mounted on a rotary evaporator. Subsequent to drying at 80°C and 5 mmHg for 2 hours, heating was initiated while causing nitrogen to flow through the flask.

The subsequent procedures were conducted in a similar manner as in Example 3, whereby a cross-linked superabsorbent polymer (2.9 g) was obtained.

### <Water absorption>

Water absorption for distilled water:
111 g/g-cross-linked superabsorbent polymer'

Water absorption for physiological saline:
35 g/g-cross-linked superabsorbent polymer

### Example 6

Fine powdery maleimide (25.3 g, 0.261 mol) and lysine monohydrochloride (4.81 g, 0.0263 mol), which was also in a fine powdery form, were charged into a pear-shaped flask of one liter capacity, and were agitated and mixed in their solid forms.

The subsequent procedures were conducted in a similar manner as in Example 1, whereby a cross-linked superabsorbent polymer (2.6 g) was obtained.

### <Water absorption>

Water absorption for distilled water:
101 g/g-cross-linked superabsorbent polymer

Water absorption for physiological saline:
33 g/g-cross-linked superabsorbent polymer

### Example 7

Concerning the cross-linked superabsorbent polymer obtained in Example 2, a biodegradation test was conducted.

Cellulose was furnished as a reference substance, and was employed as a control sample for biodegradation speeds.

The biodegradation rate on DAY 23 of composting was 50.0 [wt.%-carbon] in the case of the cross-linked superabsorbent polymer as opposed to 72.9 [wt.%-carbon] in the case of the cellulose.

### Comparative Example 1

After a 25 wt.% aqueous solution of sodium hydroxide (4.2 g, 0.0261 mol) and water (5 g) were charged into a 300-mL pear-shaped flask, fine powdery lysine monohydrochloride (4.76 g, 0.0261 mol) was added and dissolved in portions.

The flask was mounted on a rotary evaporator, and drying was conducted at 60 to at 70°C for 6 hours while controlling the vacuum level at 500 to 5 mmHg. A resulting white solid was taken out, to which fine powdery maleamic acid (30.0 g, 0.261 mol) was added. They were mixed in a mortar.

The mixed powder was then charged into a pear-shaped flask of one liter capacity. The flask was mounted on a rotary evaporator, followed by drying at 80°C and 5 mmHg for 2 hours. Subsequent to the drying, heating was initiated while causing nitrogen to flow through the flask. When the oil bath temperature arose to 150 to 160°C, the reaction mixture gradually melted so that it was agitated in the form of a paste. Heating was continued and, when the temperature reached 170 to 180°C upon elapsed time of 20 minutes, bubbling took place through the reaction mixture. After heating was continued for 20 minutes while maintaining the oil bath temperature at 180 to 190°C, the flask was allowed to cool down.

After the flask was allowed to cool down to room temperature, the reaction product (32.2 g) which had solidified in a bubbled form was taken out of the flask. Subsequent to grinding, dry classification was conducted using sieves the openings of which were 106 µm and 212 µm, respectively. A portion (6.0 g) of the classified reaction product was charged into a tubular reactor.

The tubular reactor was placed in an oven, and at room temperature and environmental pressure, nitrogen was caused to flow through the reactor. Thirty minutes later, heating was initiated. About seven minutes later, the temperature inside the oven reached 290°C, at which the reaction product was heated for 60 minutes in its powder form. The reactor was then allowed to cool down.

Subsequent to the cooling, the reaction product (4.7 g) was recovered from the tubular reactor. The reaction product was then placed together with water (30 g) in a 200-mL beaker, followed by mixing into a slurry. At room temperature, a 25 wt.% aqueous solution of sodium hydroxide was added dropwise into the beaker to conduct hydrolysis while controlling the pH at 11.0 to 12.0 inside the beaker. During the hydrolysis, it was unnecessary to add methanol as a poor solvent. Four hours later, neutralization was conducted with a 7 wt.% aqueous solution of hydrochloric acid until the pH inside the beaker dropped to 7.0.

Subsequent to the neutralization, the contents of the beaker were transferred to a 500-mL beaker, followed by the addition of methanol in an attempt to have the product precipitated. No precipitate was however formed. The mixture was hence transferred into a beaker of three liter capacity, followed by the addition of methanol (about 2 liters). The mixture then separated into an aqueous solution having a brown color and a small amount of a solid product.

Filtration was conducted to collect the solid product. Subsequent to the filtration, the product was dried for 5 hours in a vacuum drier which was controlled at 60°C, whereby a cross-linked superabsorbent polymer (0.2 g) was obtained. The water absorption of the cross-linked superabsorbent polymer was measured without classification because its yield was small.

### <Water absorption>

Water absorption for distilled water:
8 g/g-cross-linked superabsorbent polymer

Water absorption for physiological saline:
5 g/g-cross-linked superabsorbent polymer

### Comparative Example 2

After a 25 wt.% aqueous solution of sodium hydroxide (4.2 g, 0.0261 mol) and water (5 g) were charged into a 300-mL pear-shaped flask, fine powdery lysine monohydrochloride (4.76 g, 0.0261 mol) was added and dissolved in portions.

After maleamic acid (30.0 g, 0.261 mol) was added to the flask, the flask was mounted on a rotary evaporator and was then rotated for 30 minutes to agitate the contents, whereby a homogeneous raw material mixture was obtained. The raw material mixture was dried at 60 to at 70°C for 6 hours while controlling the vacuum level at 500 to 5 mmHg. A resulting white solid was taken out and ground into fine powder.

The procedures of Example 1 were then repeated likewise, whereby a cross-linked superabsorbent polymer (0.1 g) was obtained. The water absorption of the cross-linked superabsorbent polymer was measured without classification because its yield was small.

### <Water absorption>

Water absorption for distilled water:
10 g/g-cross-linked superabsorbent polymer

Water absorption for physiological saline:
5 g/g-cross-linked superabsorbent polymer

### [Comparison between the Examples and the Comparative Examples, and discussion]

In Comparative Examples 1 and 2, the hydrochloric acid contained in lysine monohydrochloride was neutralized using the base. Accordingly, the acid catalyst effects were not obtained so that the cross-linked superabsorbent polymers were obtained with low yield and with low water absorbency.

Conversely, in Examples 1 to 6, the cross-linked superabsorbent polymers were successfully obtained with high water absorbency by the simple reaction procedures.

Further, it has been confirmed from Example 7 that cross-linked superabsorbent polymers available in accordance with the production process of the present invention have excellent biodegradability.

## Claims

1. A process for the production of a cross-linked polymer, which comprises conducting a reaction in a reaction system which comprises:
(A) at least one monomer selected from the group consisting of:
(a-1) maleic anhydride and ammonia,
(a-2) a dicarboxylic acid having 4 carbon atoms and ammonia,
(a-3) a monoammonium salt and/or diammonium salt of a dicarboxylic acid having 4 carbon atoms,
(a-4) a monoamide and/or diamide of a dicarboxylic acid having 4 carbon atoms, and
(a-5) an imide having 4 carbon atoms;
(B) a cross-linking agent; and
(C) an acid.

2. A process for the production of a cross-linked polymer as described in claim 1, which comprises conducting a two-stage reaction at 100 to 250°C and 250 to 350°C in a reaction system which comprises:
(A) at least one monomer selected from the group consisting of:
(a-1) maleic anhydride and ammonia,
(a-2) a dicarboxylic acid having 4 carbon atoms and ammonia,
(a-3) a monoammonium salt and/or diammonium salt of a dicarboxylic acid having 4 carbon atoms,
(a-4) a monoamide and/or diamide of a dicarboxylic acid having 4 carbon atoms, and
(a-5) an imide having 4 carbon atoms;
(B) a polyamine; and
(C) an acid.

3. A process for the production of a cross-linked polymer as described in claim 1, which comprises the following steps:
as step 1 (polymerization step), conducting primarily a polymerization reaction at 100 to 250°C in a reaction system which comprises:
(A) at least one monomer selected from the group consisting of:
(a-1) maleic anhydride and ammonia,
(a-2) a dicarboxylic acid having 4 carbon atoms and ammonia,
(a-3) a monoammonium salt and/or diammonium salt of a dicarboxylic acid having 4 carbon atoms,
(a-4) a monoamide and/or diamide of a dicarboxylic acid having 4 carbon atoms, and
(a-5) an imide having 4 carbon atoms,
(B) a polyamine, and
(C) an acid; and
as step 2 (polymerization and cross-linking step), subjecting a reaction mixture, which has been obtained in step 1, primarily to a polymerization and cross-linking reaction at 250 to 350°C.

4. A process for the production of a cross-linked polymer as described in any one of claims 1 to 3, wherein said dicarboxylic acid having 4 carbon atoms is at least one dicarboxylic acid selected from the group consisting of dicarboxylic acids of the following chemical formulas (a-2-1) to (a-2-5):

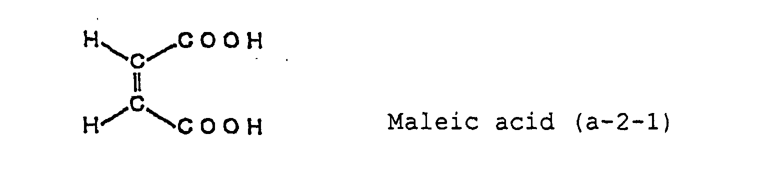

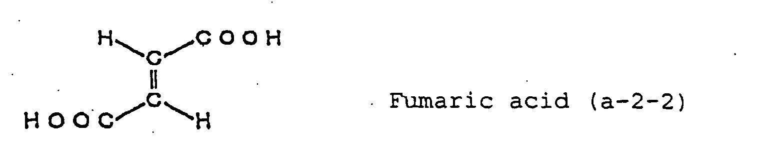

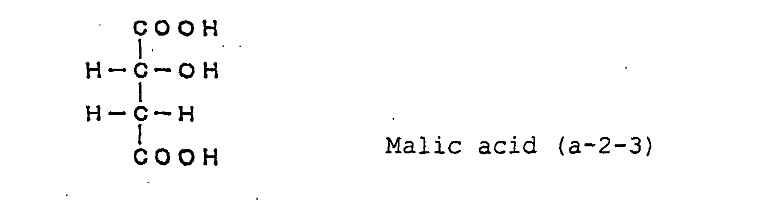

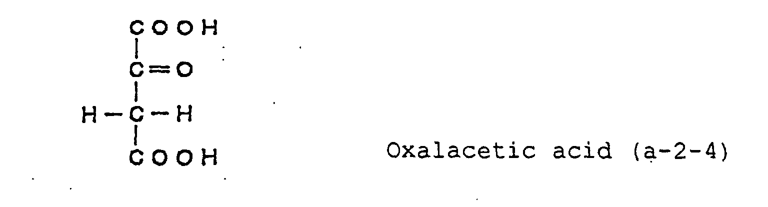

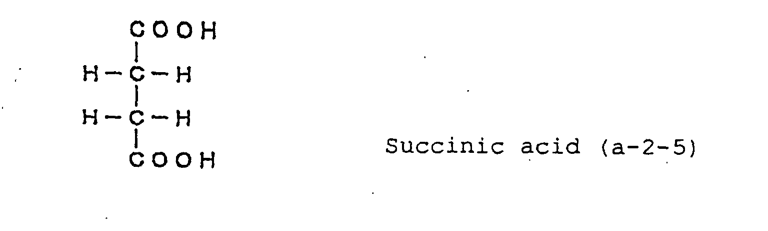

5. A process for the production of a cross-linked polymer as described in any one of claims 1 to 4, wherein said imide having 4 carbon atoms is at least one imide selected from the group consisting of imides of the following chemical formulas (a-5-1) to (a-5-4):

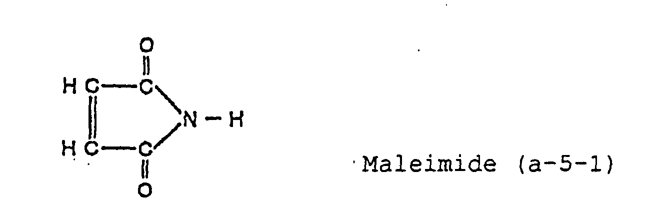

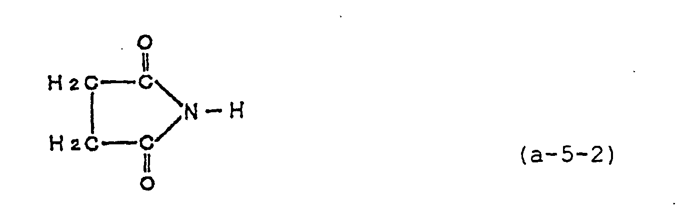

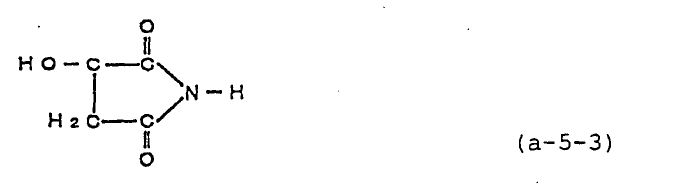

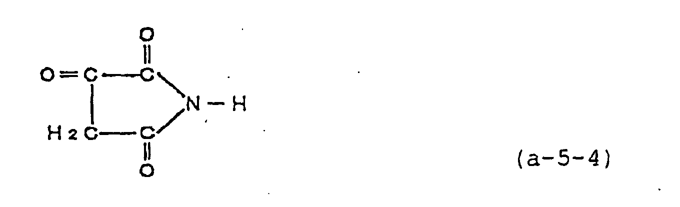

6. A process for the production of a cross-linked polymer as described in any one of claims 1 to 5, wherein said monoamide of said dicarboxylic acid having 4 carbon atoms is maleamic acid, and said imide having 4 carbon atoms is maleimide.

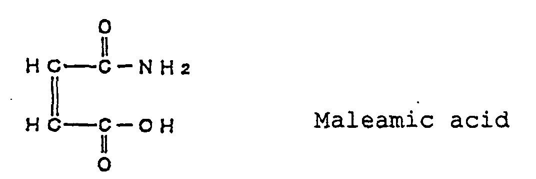

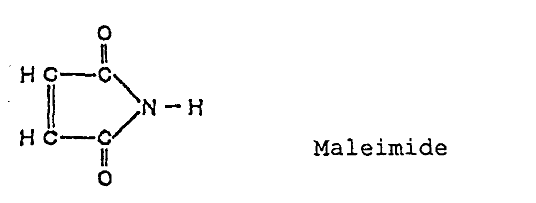

7. A process for the production of a cross-linked polymer as described in any one of claims 1 to 6, wherein said cross-linking agent is a polyamine and/or a polyol (polyhydric alcohol).

8. A process for the production of a cross-linked polymer as described in claim 7, wherein said polyamine is a diamine.

9. A process for the production of a cross-linked polymer as described in claim 7, wherein said polyamine is at least one polyamine selected from the group consisting of lysine, cystine, ornithine and alkylenediamine.

10. A process for the production of a cross-linked polymer as described in claim 7, wherein said polyol (polyhydric alcohol) is a diol (dihydric alcohol).

11. A process for the production of a cross-linked polymer as described in any one of claims 1 to 10, wherein said' acid is at least one acid selected from the group consisting of hydrochloric acid, a phosphorus oxyacid, a sulfur oxyacid, and a polyamine acid salt.

12. A process for the production of a cross-linked polymer as described in claim 11, wherein said phosphorus oxyacid is at least one phosphorus oxyacid selected from the group consisting of orthophosphoric acid, pyrophosphoric acid, polyphosphoric acid, and phosphorus pentoxide.

13. A process for the production of a cross-linked polymer as described in claim 11, wherein said sulfur oxyacid is at least one sulfur oxyacid selected from the group consisting of organic sulfonic acids having 1 to 20 carbon atoms.

14. A process for the production of a cross-linked polymer as described in claim 13, wherein said organic sulfonic acid is at least one organic sulfonic acid selected from the group consisting of ethanesulfonic acid, methanesulfonic acid, and toluenesulfonic acid.

15. A process for the production of a cross-linked polymer as described in claim 11, wherein said polyamine acid salt is an acid salt of a diamine.

16. A process for the production of a cross-linked polymer as described in claim 11, wherein said polyamine acid salt is at least one polyamine acid salt selected from the group consisting of lysine hydrochloride, cystine hydrochloride, ornithine hydrochloride, and alkylenediamine hydrochloride.

17. A process for the production of a cross-linked superabsorbent polymer, which comprises the following steps:
as step 1, producing a cross-linked polymer by a. production process described in any one of claims 1 to 16; and
as step 2, hydrolyzing at least a part of imide rings in said cross-linked polymer, which has been produced in step 1, such that said cross-linked superabsorbent polymer is produced.

18. A process for the production of a cross-linked superabsorbent polymer as described in claim 17, wherein said cross-linked superabsorbent polymer has, in at least a part of a molecule thereof, a recurring unit represented by the following chemical formula (1) and/or chemical formula (2): 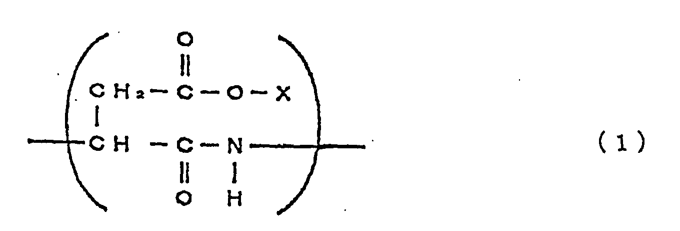 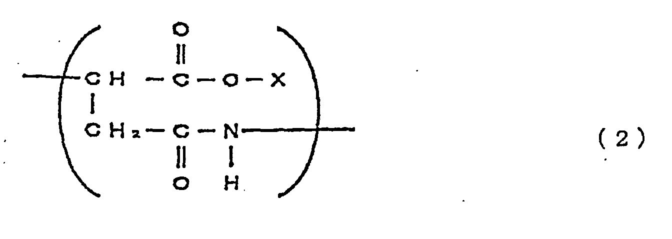 wherein Xs represent a hydrogen atom, an alkali metal ion, an alkaline earth metal ion, or an ammonium ion.

19. A process for the production of a cross-linked superabsorbent polymer as described in claim 17 or 18, wherein said cross-linked superabsorbent polymer has, in at least a part of a molecule thereof, a cross-linking structure represented by the following chemical formula (3) : 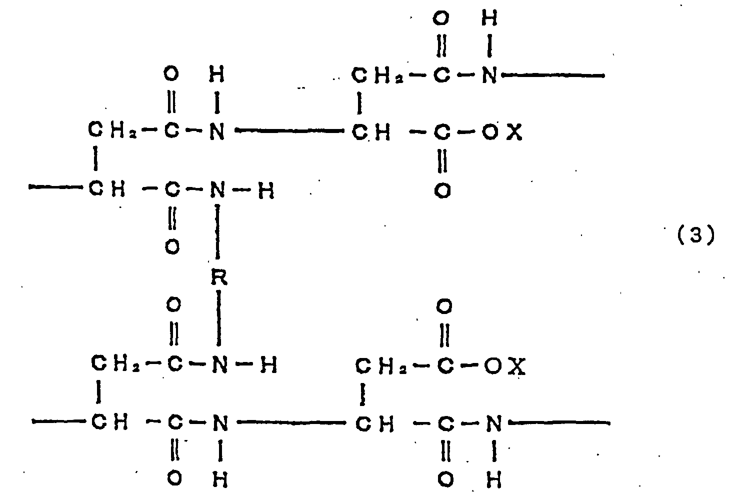 wherein R represents an aliphatic hydrocarbon group having 1 to 20 carbon atoms, an aromatic hydrocarbon group having 1 to 20 carbon atoms or a peptide chain having 1 to 10 amino acid residua, and Xs represent a hydrogen atom, an alkali metal ion, an alkaline earth metal ion or an ammonium ion.

20. A process for the production of a cross-linked superabsorbent polymer as described in claim 18 or 19, wherein in said chemical formula (3), Xs represent Na (sodium) and/or K (potassium).

21. A process for the production of a cross-linked superabsorbent polymer as described in claim 19 or 20, wherein in said chemical formula (3), R is formed containing at least one residuum selected from the group consisting of a lysine residuum, cystine residuum, ornithine residuum and an alkylenediamine residuum.

22. A process for the production of a cross-linked superabsorbent polymer as described in any one of claims 17 to 21, wherein said cross-linked superabsorbent polymer has.absorbency sufficient to absorb 20 to 200 parts by weight of physiological saline per part by weight of dry resin.

23. A process for the production of a cross-linked superabsorbent polymer as described in any one of claims 17 to 21, wherein said cross-linked superabsorbent polymer has absorbency sufficient to absorb 50 to 2,000 parts by weight of distilled water part by weight of dry resin.
